# EUROPEAN PATENT APPLICATION

(11) **EP 0 554 924 A2**
(43) Date of publication of application: **11.08.1993**
(21) Application number: 93200041.7
(22) Date of filing: 08.01.1993
(51) Int. Cl.: B60Q 1/44

(54) **Signalling device for a motorcar**

(30) Priority: 08.01.1992 NL 9200024
(71) Applicant: Gerlo, Ferdinand George, NL-2925 TJ Krimpen a/d IJssel (NL)
(72) Inventor: Gerlo, Ferdinand George, NL-2925 TJ Krimpen a/d IJssel (NL)
(74) Representative: Reynvaan, Lambertus Johannes

(57) **Abstract**

For increasing the safety of the road traffic during heavy fog (visibility less than 50 m.), the present invention suggest to equip a motor vehicle, which is provided with a rear fog-light and a brake light, with a signalling device, said device, in case the rear fog-light is on, being adapted to cause the rear fog-light to flicker with a chosen frequency for an adjustable period of time upon actuation of the brake light by operating the brake pedal.

## Description

The invention relates to a signalling device for a motorcar, which is provided with a brake light as well as a rear fog-light.

As required by law, a motorcar is only allowed to have its rear fog-light on in case the headlights are on and the weather conditions give rise thereto, such as heavy rain and very thick fog (visibility less than 50 meter).

Particularly in very thick fog the situation occurs that a number of motorcars are driving after one another with considerable speed, in which case each driver orients himself on the rear fog-light of the preceding car. This situation can be the cause of very severe accidents if one of the cars for whatever reason starts braking. Due to the fact that the brake-lights are not as bright as the rear fog-light, the driver of the next following car will only after some period of time be aware that the car in front of him is braking and consequently operates the brakes himself. In this way some "brake-seconds" are lost, and a chain collision can occur together with all inherent disastrous consequences.

The invention aims to provide a signalling device for a motorcar, by means of which it is possible to warn the next following car in very thick fog that the brakes are put on.

According to the invention this purpose is achieved by providing a signalling device for a motorcar, which is adapted in such a way, that if the rear fog-light is on, operation of the brakes causes the rear fog-light to flicker with a predetermined frequency. In this way the rear fog-light will flicker together with the lighting up of the brake-lights. Said flickering stops as soon as the brake-lights switch off and there is no longer a brake action.

In the above mentionned situation, in which each driver orients himself on the rear fog-light of the preceding car, the driver of the next car in line will only notice the flickering of the rear fog-light and will realize at once that the preceding car is braking. In this way no valuable "brake-seconds" are lost and panic stops can be avoided, which in general are the cause of severe accidents.

Preferably the maximum period of time during which the signalling device causes the rear fog-light to flicker is adjustable, a period of time of eight seconds is preferred. On the one hand the flickering must provide a significant warning signal, while on the other hand it is very inconvenient to look into a constantly flickering rear foglight in case one is close behind the other car, for example in a slowly moving queue. This situation occurs particularly with vehicles having an automatic transmission, in which the brake pedal during a standstill constantly has to be operated to avoid a slow forward movement (creeping). For this reason the maximum period of time for which the rear foglight will flicker upon operation of the brake pedal is limited.

Preferably the flicker frequency of the rear fog-light is chosen to be about twice on/off per second (2 Hz). Said frequency is chosen low on purpose in order to provide a notable warning signal. Further it is known that the frequency of four and nine Hz is considered to be very troublesome for epileptic persons, so it is advisable to avoid said frequencys.

It is generally expected that the safety of the road traffic will increase significantly in case all vehicles are provided with a signalling device according to the present invention.

A signalling device according to the invention can be realised in a simple way with aid of electronic means. The signalling device can for example comprise an input circuit which is directly connected to the brake lights, a base pulse emitter having an adjustable frequency, a time delaying element connected thereto and a relay connected to the rear fog-light.

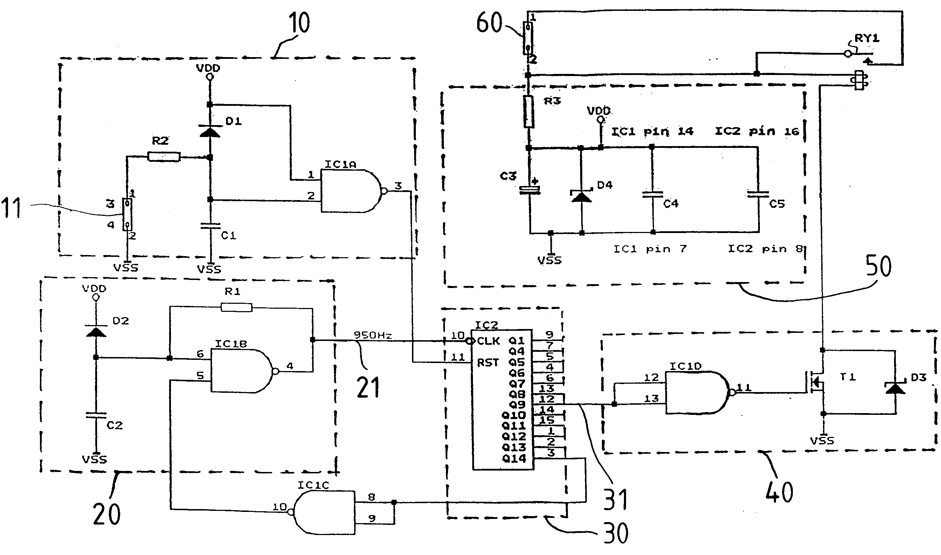

The invention will be elucidated in more detail with reference to the accompagnying drawing, which shows as example in a single figure an electronic diagram of an embodiment of the invention. Terminals having the same referential numbers are interconnected.

In the figure reference number 10 indicates an input circuit, which is directly coupled to the brake light 11. Said input circuit 10 is connected to an input terminal of a time delaying circuit 30. Another terminal of the time delaying element 30 is connected to a base pulse emitter 20. Said pulse emitter provides a pulse frequency at an output wire 21 thereof, for example a frequency of 950 Hz, said frequency being split in the element 30 to a frequency suitable for the present purpose. The element 30 also provides a limitation of the flickering time for example a time period of eight seconds. For the man of the art it will be apparent that many other solutions are possible for obtaining a low frequency of the flickering.

Through the output wire 31 of the time delaying element 30 the output signal is supplied to an electric circuit 40 for switching on or off the relay RY1 of the rear fog-light. Said relay RY1 has a switch for disconnecting the current to the rear fog-light 60 upon activating of said relay. In stead of an electric relay having a coil, magnetizeable core (armature and disconnecting switch) of course also an electronic solution is possible, suitable to switch the power to the rear fog-light alternately on and off.

The power for the shown electronic circuits 10, 20, 30 and 40 is supplied by the battery of the automobile (for exemple 12 volt for passenger cars, and 24 volt for trucks) by means of a voltage reduction circuit 50 supplying a reduced continuous voltage of e.g. 3,2 volt.

## Claims

1. Signalling device for a motorcar, which is provided with a brake-light as well as a rear fog-light, characterized in that the signalling device is adapted in such a way that in case the rear foglight is on actuation of the brake-light causes the rear fog-light to flicker with a predetermined frequency.

2. Signalling device according to claim 1, characterized in that continuously actuation of the brake-light, causes the rear fog-light to flicker for an adjustable maximum period of time.

3. Signalling device according to claim 2, characterized in that the maximum period of time is eight seconds.

4. Signalling device according to claim 1, characterized in that the flicker frequency of the rear fog-light is twice on/off per second (2 Hz).

5. Signalling device according to one or more of the preceding claims, characterized in that the signalling device comprises a input circuit (10) connected to the brake light, further a base pulse emitter (20) having an adjustable frequency, which is connected to a time delaying element (30) and a relay (RY1) connected to the rear fog-light.
